# EUROPEAN PATENT APPLICATION

(11) **EP 3 734 827 A1**
(43) Date of publication of application: **04.11.2020**
(21) Application number: 20172277.4
(22) Date of filing: 30.04.2020
(51) Int. Cl.: H02M 7/219, H02M 7/483

(54) **BACK-TO-BACK CONVERTER ARRANGEMENT**

(30) Priority: 02.05.2019 EP 19172275
(71) Applicant: ABB Schweiz AG, 5400 Baden (CH)
(72) Inventor: OKAZAKI, Yuhei, 722 19 Västerås (SE); DIJKHUIZEN, Frans, 726 31 Skultuna (SE)
(74) Representative: AWA Sweden AB

(57) **Abstract**

An MMC of a back-to-back converter arrangement comprises a first and a second phase leg connected between a first DC terminal having a first DC voltage and a second DC terminal having a second DC voltage, the phase legs comprising upper and lower arms with submodules, where each submodule comprises an energy storage element and the junction between two arms provides a corresponding AC terminal. Each phase leg is controlled (42) according to a scheme for generating a waveform on the corresponding AC terminal, which control comprises controlling (42a) the upper phase arm to bypass their energy storage elements and the lower phase arm to be blocked in a first interval (TI1), controlling (42b) the upper and lower phase arms to transition from the first to the second DC voltage in a second interval (TI2), controlling (42c) the upper phase arm to be blocked and the lower phase arm to bypass their energy storage elements in a third interval (TI3), and controlling (42d) the upper and lower phase arms to transition from the second to the first DC voltage in a fourth interval (TI4).

## Description

### TECHNICAL FIELD

The present invention generally relates to back-to-back converters. More particularly the present invention relates to a back-to back converter arrangement as well as to a method and computer program product for controlling at least one first voltage source converter of such a back-to-back converter arrangement.

### BACKGROUND

Back-to-back (BTB) converter arrangements are typically provided for conversion between Alternating Current (AC) and Direct Current (DC). A BTB converter arrangement comprising two or more voltage source converters with DC sides connected to each other are of interest to use in a number of different environments, such as in a converter station interconnecting two AC grids or in a radial feeder system. Another area of interest is as a drive for a load such as a motor.

A distribution-level back to back converter arrangement using modular multilevel converters (MMCs) requires two MMCs with bulky capacitors and inductors. It increases the foot print of the converter station, which makes it difficult to install such an arrangement in an urban area. Reducing both capacitor and inductor without increasing losses is challenging. In BTB applications, the MMC does not require to maintain the DC-link voltage and current constant unlike High Voltage Direct Current (HVDC) systems since the DC quantities are kept inside of the converter. However, today's BTB arrangements maintain their DC-link voltage and current constant similarly to the HVDC system.

This aspect can be exploited in order to reduce the footprint of the BTB converter arrangement.

Some ideas regarding footprint reduction have evolved in relation to the use of quasi two-level converters. In SE 1851118 there is described a voltage source converter where one of three phase legs is operated as an MMC and the other two phase legs are operated as Integrated Capacitor Blocked Transistor (ICBT) converters (IGCTs).

Although this technique is interesting there is still room for improvement with regard to size reduction. The use of quasi two-level operation may additionally not always be desirable

### SUMMARY

One object of the invention is directed towards providing converter size reduction in a back-to-back converter arrangement.

This object is according to a first aspect achieved through a back-to-back converter arrangement comprising a first and a second voltage source converter, each converting between Alternating Current (AC) and Direct Current (DC) and having an AC side and a DC side, where the DC side of the first voltage source converter is connected to the DC side of the second voltage source converter, wherein the first voltage source converter is a modular multilevel converter comprising:
at least a first and a second phase leg connected between a first DC terminal having a first DC voltage and a second DC terminal having a second DC voltage, each phase leg comprising an upper arm and a lower arm with submodules, where each submodule comprises an energy storage element and the junction between the arms is connected to a corresponding AC terminal, the back-to-back converter arrangement further comprising a control unit configured to:
control each phase leg comprising submodules according to a waveform generating scheme for generating a waveform on the AC terminal of the corresponding phase leg, the control according to the waveform generating scheme comprising
controlling the submodules in the upper phase arm to bypass their energy storage elements and the submodules in the lower phase arm to be blocked in a first time interval of a control cycle for the phase leg in order to provide the first DC voltage on the AC terminal, controlling the submodules in the upper and lower phase arms to transition from the first to the second DC voltage in a second time interval of the control cycle,
controlling the submodules in the upper phase arm to be blocked and the submodules in the lower phase arm to bypass their energy storage elements in a third time interval of the control cycle in order to provide the second DC voltage on the AC terminal, and
controlling the submodules in the upper and lower phase arm to transition from the second to the first DC voltage in a fourth time interval of the control cycle.

The object is according to a second aspect achieved through a method of controlling at least one first voltage source converter of a back-to-back converter arrangement comprising the first and a second voltage source converter, each converting between Alternating Current (AC) and Direct Current (DC) and having an AC side and a DC side, where the DC side of the first voltage source converter is connected to the DC side of the second voltage source converter and the first voltage source converter is a modular multilevel converter comprising at least a first and a second phase leg connected between a first DC terminal having a first voltage level and a second DC terminal having a second voltage level, the first and second phase leg each comprising an upper arm and a lower arm with submodules, where each submodule comprises an energy storage element and the junction between the arms is connected to a corresponding AC terminal, the method comprising
controlling each phase leg comprising submodules according to a waveform generating scheme for generating a waveform on the AC terminal of the corresponding phase leg, the controlling according to the waveform generating scheme comprising
controlling the submodules in the upper phase arm to bypass their energy storage elements and the submodules in the lower phase arm to be blocked in a first time interval of a control cycle for the phase leg in order to provide the first DC voltage on the AC terminal,
controlling the submodules in the upper and lower phase arms to transition from the first to the second DC voltage in a second time interval of the control cycle,
controlling the submodules in the upper phase arm to be blocked and the submodules in the lower phase arm to bypass their energy storage elements in a third time interval of the control cycle in order to provide the second DC voltage on the AC terminal, and
controlling the submodules in the upper and lower phase arm to transition from the second to the first DC voltage in a fourth time interval of the control cycle.

The object is according to a third aspect achieved through a computer program product for controlling at least one first voltage source converter in a back-to-back converter arrangement comprising the first and a second voltage source converter, each converting between Alternating Current (AC) and Direct Current (DC) and having an AC side and a DC side, where the DC side of the first voltage source converter is connected to the DC side of the second voltage source converter and the first voltage source converter is a modular multilevel converter comprising at least a first and a second phase leg connected between a first DC terminal having a first voltage level and a second DC terminal having a second voltage level, the first and second phase leg each comprising an upper arm and a lower arm with submodules, where each submodule comprises an energy storage element and the junction between the arms is connected to a corresponding AC terminal, the computer program product comprising a data carrier with computer program code configured to cause a control unit to, when said computer program code is loaded into the control unit control each phase leg comprising submodules according to a waveform generating scheme for generating a waveform on the AC terminal of the corresponding phase leg, the control according to the waveform generating scheme comprising
controlling the submodules in the upper phase arm to bypass their energy storage elements and the submodules in the lower phase arm to be blocked in a first time interval of a control cycle for the phase leg in order to provide the first DC voltage on the AC terminal,
controlling the submodules in the upper and lower phase arms to transition from the first to the second DC voltage in a second time interval of the control cycle,
controlling the submodules in the upper phase arm to be blocked and the submodules in the lower phase arm to bypass their energy storage elements in a third time interval of the control cycle in order to provide the second DC voltage on the AC terminal, and
controlling the submodules in the upper and lower phase arm to transition from the second to the first DC voltage in a fourth time interval of the control cycle.

Another aspect is concerned with a motor drive comprising the back-to-back converter arrangement according to the first aspect.

A further aspect is concerned with an AC power system comprising a back-to-back converter arrangement according to the first aspect.

The control unit may be realized as a processor acting on computer instructions. This may be realized through hardware, such as a dedicated circuit, like an Application Specific Integrated Circuit (ASIC) or a Field-Programmable Gate Array (FPGA). The control unit may also be realized as a processor acting on computer program code in a memory. This computer program code may also be provided on one or more data carriers which performs the control of the control unit when being operated on by the processor.

The phase legs may be connected in parallel between the first and second DC terminals.

The length of the second and fourth time interval may each be one sixth of the cycle length. Moreover, switching is only performed in the second and fourth time intervals. Thereby switching in a phase leg is only performed in one third of the control cycle. It is also possible that a transition time interval is divided into equally sized dwell times on which submodules are to contribute a submodule voltage to the forming of the waveshape. The switching frequency used in the transition mode may furthermore be below 100 Hz.

According to a variation of the first aspect, it is possible that when the submodules in the upper and lower phase arms of a phase leg are controlled to transition between the first and the second DC voltages, the control unit is configured to control the submodules in the phase arms of the other phase legs to bypass their energy storage elements or to be blocked.

According to a corresponding variation of the second aspect, it is possible that when a phase leg comprising the submodules in the upper and lower phase arms of a phase leg are controlled to transition between the first and the second DC voltages, the method further comprises controlling the submodules in the phase arms of the other phase legs to bypass their energy storage elements or to be blocked.

According to a variation of the first aspect, the second converter is set to perform DC voltage control and the first converter is set to perform power control.

Both the first and second converters may convert between DC and three-phase AC.

According to a corresponding variation of the second aspect, the method further comprises controlling the second voltage source converter to perform DC voltage control and controlling the first voltage source converter to perform power control.

The second converter may also be a modular multilevel converter also set operate according to the waveform generating scheme.

The first converter may further comprise a third phase leg with an upper and a lower phase arm and controlled by the control unit according to the waveform generating scheme for forming a waveshape on a third AC terminal of the third phase leg.

In the operation of this type of converter, in one time interval one phase leg may be controlled so that the voltage at the corresponding AC terminal resembles a section of an ideal periodic waveshape with the highest or lowest derivative while one of the remaining phase legs is controlled so that the submodules of the upper phase arm are blocked and the submodules of the lower phase arm bypass their energy storage elements and the other of the remaining phase legs is controlled so that the submodules of the upper phase arm bypass their energy storage elements and the submodules of the lower phase arm are blocked.

According to another variation, the first converter may comprise a branch of energy storage elements connected between the first and the second DC terminals, which branch comprises a midpoint with a third AC terminal. If the second voltage source converter is an MMC it may have the same type of realization.

According to another variation there may be a first filter connected to the DC side of the first converter and set to filter harmonics on the DC side of the first converter and a second filter connected to the DC side of the second converter and set to filter harmonics on the DC side of the second converter. Each filter may be set to filter sixth order harmonics, i.e. to filter harmonic frequencies at one sixth of the fundamental frequency of the generated waveform.

The frequency and phase of the first and second voltage source converters may be the same. Also, the AC voltages at the AC sides may be the same. As an alternative it is possible that at least one of frequency and phase of the first converter differs from the frequency and phase of the second converter. Both may also differ. It is in this latter case also possible that the AC voltages differ.

The invention has a number of advantages. The size of the energy storage elements in the submodules may be reduced compared with regular MMC operation. Also, the current rating of the submodules may be lowered.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described with reference to the accompanying figures, where
fig. 1 shows an exemplifying AC system in the form of a radial feeder system comprising a back-to back converter arrangement,
fig. 2 shows an example of the use of a back-to back converter arrangement as a motor drive,
fig. 3 shows an example of a back-to back converter arrangement with the converters realized as MMCs and connected between two transformers,
fig. 4 schematically shows one realization of a first converter in the converter arrangement with three phase legs comprising upper and lower phase arms comprising submodules,
fig. 5 schematically shows a first phase leg of the converter from fig. 4 operating in a first clamping mode, a second phase leg of the converter operating in a transition mode and a third phase leg operating in a second clamping mode,
fig. 6 schematically shows arm currents and voltages for the phase arms of a phase leg being operated in a control cycle,
fig. 7 shows a flow chart of a number of method steps in a method for operating the back-to-back converter arrangement,
fig. 8 shows a flow chart of a number of method steps for performing phase leg control according to a waveform generating scheme in the first converter,
fig. 9 schematically shows a first realization of the back-to back converter arrangement for use both with a synchronous and an asynchronous AC grid,
fig. 10 shows a second realization of the back-to-back converter arrangement comprising DC filters that can be used in asynchronous grid environments,
fig. 11 schematically shows a third realization of the back-to back converter arrangement where one of the phase legs with submodules has been replaced by a string of energy storage elements, and
fig. 12 shows a computer program product comprising a data carrier with computer program code, in the form of a CD-ROM disc, for implementing the control unit of the converter.

### DETAILED DESCRIPTION

The invention is related to a back-to-back converter arrangement as well as to an Alternating Current (AC) system comprising a back-to-back converter arrangement.

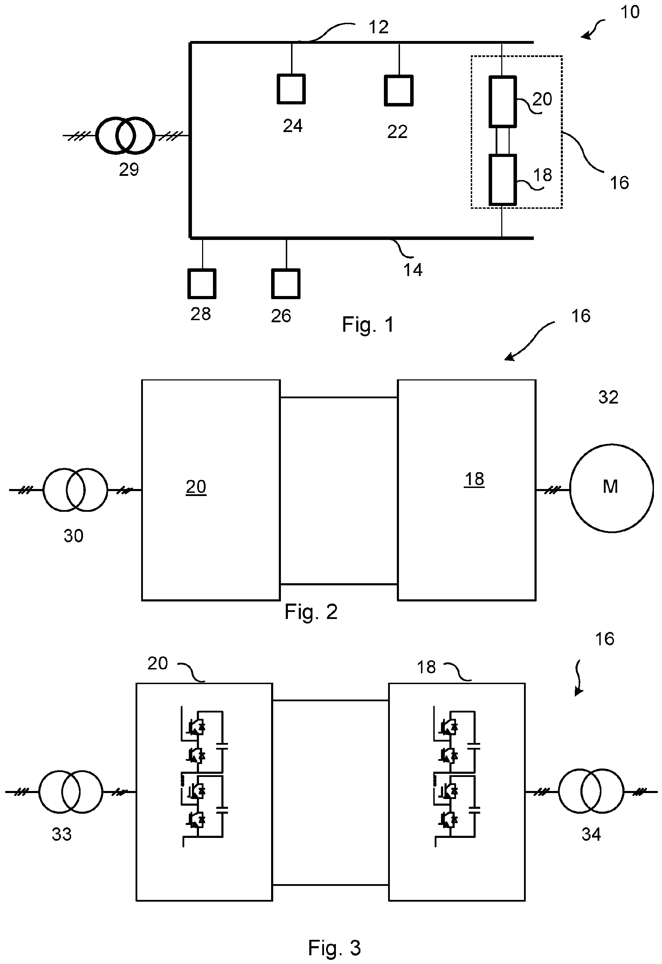

Fig. 1 shows one exemplifying AC system where a back-to-back converter arrangement may be used.

Fig. 1 shows a radial feeder system 10 comprising a first feeder 12 to which first feeder 12 there is connected a first power compensation device 22, a renewable power generating device 24, for instance in the form of a photo voltaic power generating unit, as well as a back-to-back converter arrangement 16. The radial feeder system 10 also comprises a second feeder 14 to which there is connected a load 26, a second power compensating device 28 as well as the back-to-back converter arrangement 16. The power compensating devices 22 and 28 may be devices for active and/or reactive power compensation for instance realized as STATCOMs.

The radial feeder system 10 is merely one example of an AC system where the back-to-back converter arrangement may be used.

The back-to-back converter arrangement 16 comprises a first voltage source converter (VSC) 18 converting between Alternating Current (AC) and Direct Current (DC) and having an AC side connected to the second feeder 14 and a DC side connected to a DC side of a second voltage source converter (VSC) 20 also converting between AC and DC, where the second VSC 20 in turn has an AC side connected to the first feeder 12. The connection of the DC sides to each other are made using a DC link. Thereby each VSC has an AC side and a DC side, where the DC side of the first VSC 18 is connected to the DC side of the second VSC 20.

The radial feeder system 10 may be a medium voltage power distribution system, as an example operating at 35 kV, that may be connected to a grid via a first transformer 29, where the grid may be a high voltage AC system as an example operating at 132 kV. Because of this the back-to-back converter arrangement may operate in the Medium Voltage Direct Current (MVDC) domain.

In such a distribution system 10 the use of a renewable power generating unit may create a voltage imbalance, especially if the grid system is weak. This imbalance may be expressed as the first feeder having a first voltage PCC1 = Vx and the second feeder having a second voltage PCC2 = Vx +dVx, where the voltage imbalance is designated dVx. The power compensating devices 22 and 28 and the back-to-back converter arrangement 16 are provided for handling such voltage imbalances.

Fig. 2 shows another area of use for the back-to-back converter arrangement 16. The back to back converter arrangement 16 may be provided as a drive for a load, such as a variable speed drive for a motor. For this reason, the AC side of the second converter 20 is connected to a second transformer 30 and the AC side of the first converter 18 is connected to a motor M 32.

Fig. 3 shows yet another possible realization of the back-to-back converter arrangement 16, which may be provided as an interface between two AC transmission systems, for instance in a converter station. In this case the AC side of the second converter 20 is connected to a third transformer 33, which in turn is connected to a first AC transmissions system, while the AC side of the first converter 18 is connected to a fourth transformer 34, which in turn is connected to a second AC transmission system.

In all the examples given above, the converters 18 and 20 in the back-to back converter arrangement 16 are voltage source converters (VSCs). In the example of fig. 3, both the converters are more particularly modular multilevel converts (MMCs) where submodules are used. This is schematically indicated through both converters comprising two submodules.

According to various aspects of the invention the first converter 18 is thus an MMC. As can be seen in fig. 3 the second converter may also be an MMC. However, it may also be another type of VSC, such as a two-level converter. It should also be realized that the second converter 20 may be of other types. One example is a neutral point clamped converter.

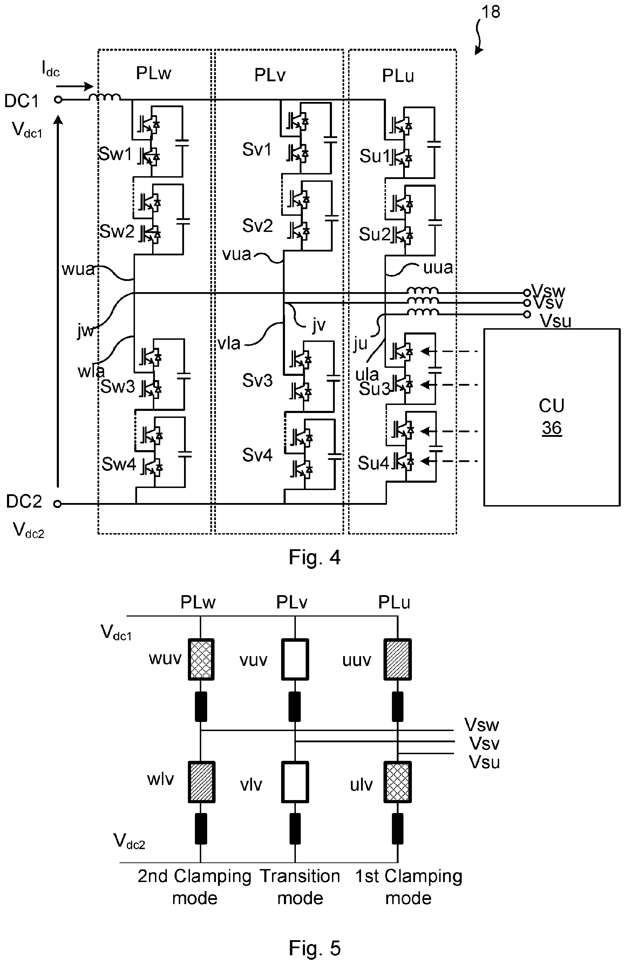

Fig. 4 schematically shows one realization of the first converter 18, which realization may also be applicable for some realizations of the second converter.

The first converter 18 comprises three phase legs PLu, PLv and PLw connected between a first DC terminal DC1 having a first DC voltage Vdc1, and a second DC terminal DC2 having a second DC voltage Vdc2. A first phase leg PLu is used for a U phase, a second phase leg PLv for a V phase and a third phase leg PLw for a W phase. Each phase leg comprises an upper arm uua, vua and wua and a lower arm ula, vla and wla with submodules Su1, Su2, Su3, Su4, Sv1, Sv2, Sv3, Sv4, Sw1, Sw2, Sw3 and Sw4, where the junction ju, jv and jw between the arms is connected to a corresponding AC terminal Vsu, Vsv, Vsw. In the given example each phase arm is exemplified by two submodules. Therefore, the upper phase arm uua of the first phase leg PLu comprises a first and second submodule Su1 and Su2, while the lower phase arm ula of the first phase leg PLu comprises a third and a fourth submodule Su3 and Su4. In a similar manner the upper phase arm vua of the second phase leg PLv comprises a first and second submodule Sv1 and Sv2, while the lower phase arm vla of the second phase leg PLv comprises a third and a fourth submodule Sv3 and Sv4. The upper phase arm wua of the third phase leg PLw comprises a first and second submodule Sw1 and Sw2, while the lower phase arm wla of the third phase leg PLw comprises a third and a fourth submodule Sw3 and Sw4.

Moreover, the submodules of a phase arm may together form a valve. The first and second submodules Su1 and Su2 in the upper arm uua of the first phase leg PLu may form an upper arm valve uuv, while the third and fourth submodules Su3 and Su4 in the lower arm ula of the first phase leg PLu may form a lower arm valve ulv. The first and second submodules Sv1 and Sv2 in the upper arm vua of the second phase leg PLv may form an upper arm valve vuv, while the third and fourth submodules Sv3 and Sv4 in the lower arm vla of the second phase leg PLv may form a lower arm valve vlv. Finally, the first and second submodules Sw1 and Sw2 in the upper arm wua of the third phase leg PLw may form an upper arm valve wuv, while the third and fourth submodules Sw3 and Sw4 in the lower arm wla of the third phase leg PLw may form a lower arm valve wlv.

The midpoint ju of the first phase leg PLu is connected to a first AC terminal Vsu via a reactor, the midpoint jv of the second phase leg PLv is connected to a second AC terminal Vsv via a reactor and the midpoint jw of the third phase leg PLw is connected to a third AC terminal Vsw via a reactor.

The back-to-back converter arrangement further comprises a control unit CU 36 controlling all the submodules of the first converter 18. However, in fig. 4 only the control of the submodules Su3 and Su4 of the lower arm ula in the first phase leg Plu is shown with dashed arrows. The control unit 36 may, as is implied in fig. 4, be a part of first converter 18. However, it may also be a separate entity or even be a part of the second converter. The control unit 36 may additionally control the second converter. The control unit may also be separated into two parts; a first part controlling the first converter and a second part controlling the second converter, where these parts may also be provided in the different converters.

As can also be seen in fig. 4, a submodule comprises an energy storage element, here exemplified by a capacitor, and at least one switching unit in a branch in parallel with the energy storage element. The at least one switching unit may be controlled to insert the energy storage element in the phase leg, to bypass it or to completely block the submodule. In the type of submodule shown in fig. 4, which is a half-bridge submodule, there is a first switching unit, which when being turned on inserts the energy storage element into the phase leg, and a second switching unit, which when being turned on bypasses the energy storage element. When both switching units are being turned off, the submodule is blocked.

The above described submodules are half bridge submodules, which are submodules with unipolar voltage contribution capability. However, it is also possible to use submodules with bipolar voltage contribution capability, such as full bridge submodules.

According to aspects of the invention, the phase legs are operated cyclically in that at a given point in time one phase leg operates in a first clamping mode, another phase leg operates in a transition mode and the last phase leg operates in a second clamping mode, where the first clamping mode involves clamping the AC terminal of the phase leg to the first DC voltage Vdc1 on the first DC terminal DC1, the second clamping mode involves clamping the AC terminal of the phase leg to the second DC voltage Vdc2 of the second DC terminal and the transition mode involves transitioning between the two voltage levels.

Fig. 5 schematically indicates the cyclical operation of the first converter for the different phase legs. In the shown example the first phase leg PLu is in a first clamping mode, which involves clamping the corresponding AC terminal Vsu to the first DC voltage, the second phase leg PLv is in a transition mode where the submodules are controlled to make the voltage on the corresponding AC terminal transition between the first and the second DC voltages and the third phase leg PLw is in a second clamping mode where the corresponding AC terminal is clamped to the second DC voltage Vdc2. The clamping is in this case done through the valve that is placed between the AC terminal and the DC terminal having the desired potential being bypassed, which is done through all the submodules of the valve having their energy storage elements bypassed. The other valve of the phase leg is in this case blocked, which may be done through blocking of all the submodules.

As the first phase leg PLu is in the first clamping mode where clamping is made to the first DC voltage, this means that the upper valve uuv is bypassed while the lower valve ulv is blocked. As the third phase leg PLw is in the second clamping mode, this means that the upper valve wuv is blocked, while the lower valve wlv is bypassed. As the second phase leg PLv is in the transitional mode, this means that the submodules of both the upper and lower valves vuv and vlv are used in waveforming, their energy storage elements are thus sequentially inserted and bypassed. The bypassing is in fig. 5 shown through the corresponding valve being hatched, while the blocking is shown through the corresponding valve being cross-hatched. The valves that operate in the transition mode are shown without hatching.

It can thus be seen that when one phase leg, here the second phase leg PLv, is in the transition mode, one of the remaining phase legs, in this case the third phase leg Plw, is controlled so that the submodules of the upper phase arm are blocked and the submodules of the lower phase arm bypass their energy storage elements and the other of the remaining phase legs, in this case the first phase leg PLu, is controlled so that the submodules of the upper phase arm bypass their energy storage elements and the submodules of the lower phase arm are blocked.

As was mentioned above, the operation is performed cyclically. This means that the different modes are performed one after the other in each phase leg. The cycles are also delayed in relation to each other with a delay of 120 degrees. Thereby each phase leg is controlled cyclically in at least four different time intervals, where in a first of the time intervals the phase leg is operated in the first clamping mode, in a second time interval the phase leg is operated in a first transition mode where the AC terminal voltage transitions from the first to the second DC voltage, a third time interval where the phase leg is in the second clamping mode and a fourth time interval in which the phase leg is operated in a second transition mode where the AC terminal voltage transitions from the second to the first DC voltage.

Two arms, i.e. a phase leg, operating in the transition modes may cycle as follows:
1. 0≤ θ≤ 60 deg. : V phase leg in the first transition mode.
2. 60≤θ≤ 120 deg. : U phase leg in the first transition mode.
3. 120≤θ≤ 180 deg. : W phase leg in the first transition mode.
4. 180≤θ≤ 240 deg. : V phase leg in the second transition mode.
5. 240≤θ≤ 300 deg. : U phase leg in the second transition mode.
6. 300≤θ≤ 360 deg. : W phase leg in the second transition mode.

Note that the grid voltage/transformer voltage in the u phase may be to be cos(wt). The resultant DC-link voltage is the same waveform as the conventional 6 pulse three-phase diode rectifier, whereas the AC voltage is a sinusoidal waveform.

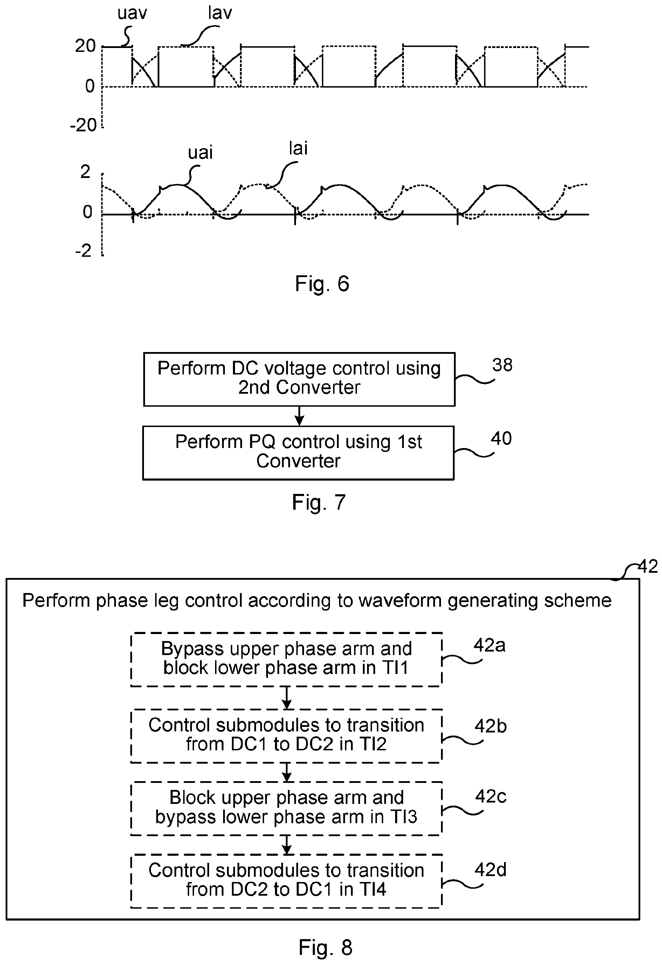

Fig. 6 shows the voltages and currents of the upper and lower phase arms of a phase leg, where the upper arm voltages uav and currents uai are shown as solid curves, while the lower arm voltages lav and currents lav are shown as dashed curves. The upper arm voltage uav is the voltage across the upper arm, while the lower arm voltage lav is the voltage across the lower arm. The upper arm current uai is the current from the upper arm into the AC terminal of the phase leg and the lower arm current lai is the current from this AC terminal into the lower arm. As can be understood from the curve of the phase arm voltage, the resulting waveshape has a resemblance to an ideal periodic waveshape, for instance a sine wave, where the areas around the maxima and minima of such an ideal waveshape are square shaped formed through the clamping modes which are joined by stepped shapes resembling sections of the ideal waveshape with the highest and lowest derivatives, which stepped shapes are formed by the transition modes.

One way of operating the back-to-back converter arrangement being performed by the first control unit will now be described in some more detail with reference being made to fig. 7, which shows a flow chart of a number of method steps for controlling DC voltage and AC power delivery in the back-to-back converter arrangement, and to fig. 8, which shows a flow chart of a number of method steps for performing phase leg control according to a waveform generating scheme in the first converter.

In this control the control unit 36 controls the second converter 20 to perform DC voltage control on the DC link between the two converters 18 and 20, step 38. The control unit 36 also controls the first converter 18 to perform power control, step 40, which power control may involve controlling the active P and reactive Q power at the AC side of the first converter. The second converter is thereby set to perform DC voltage control and the first converter is set to perform power control. The power control may as an example be performed using a feedback loop. The difference between the actual and desired power P/Q may be supplied to a PI controller having an output from which a voltage control signal is obtained that is used for the control of the valves of the first converter 18. The DC voltage control may also be implemented using feedback. However, feedforward control is also possible.

Moreover, in the control of the first converter 18, the control unit 36 additionally controls each phase leg that comprises submodules according to a waveform generating scheme, step 42, which waveform generating scheme is a scheme of forming or generating a waveform on the AC terminal of the corresponding phase leg. The waveshape is obtained through clamping the AC terminal to the first DC voltage in a first time interval TI1, make the voltage at the AC terminal transition from the first to the second DC voltage in a second time interval TI2, clamp the AC terminal to the second DC voltage in a third time interval TI3 and make the voltage at the AC terminal transition from the second to the first DC voltage in a fourth time interval TI4.

The control of the submodules of a phase leg according to the waveform generating scheme, may in this regard involve controlling the submodules in the upper phase arm to bypass their energy storage elements and controlling the submodules in the lower phase arm to be blocked in the first time interval TI1 of the control cycle in order to clamp the AC terminal of the phase leg to the first DC voltage Vdc1,step 42a. The control also comprises controlling the submodules of the upper and lower phase arms to transition from the first to the second DC voltage in the second time interval TI2 of the control cycle, step 42b. This may involve controlling the submodules of the phase leg to make the voltage at the AC terminal transition from the first DC voltage Vdc1 to the second DC voltage Vdc2, which may involve controlling the submodules as an MMC, which in this case may involve sequentially inserting and bypassing the energy storage elements of the submodules in the second time interval TI2. The insertion and bypassing is typically made in equal sized steps or dwell times in which submodules are to contribute a submodule voltage to the forming of the waveshape. These steps are made in the whole of the time interval TI2. The second time interval TI2 may additionally be one sixth of the whole cycle. A switching frequency used in the transition mode may also be below 100 Hz. This is followed by controlling the submodules in the upper phase arm to be blocked and the submodules of the lower phase arm to bypass their energy storage elements in a third time interval TI3 of the control cycle in order to provide the second DC voltage Vdc2 on the AC terminal, step 42c. There is thus a blocking of the upper phase arm and a bypassing of the lower phase arm in the third time interval TI3 and thereby the AC terminal is clamped to the second DC voltage Vdc2. Finally the submodules of the upper and lower phase arms are controlled to transition from the second to the first voltage level Vdc2 and Vdc1 in a fourth time interval TI4 of the control cycle, step 42d. Thereby the submodules of the phase leg are controlled to make the voltage at the AC terminal transition from the second DC voltage Vdc2 to the first DC voltage Vdc1, which may involve controlling the submodules as an MMC, which in this case may involve sequentially inserting and bypassing the energy storage elements of the submodules in the time interval, which may be one sixth of the whole cycle. The second and fourth time intervals TI2 and TI4 may thus have a length that is one sixth of the cycle as well as a switching frequency below 100 Hz. However, the first and third time intervals TI1 and TI3 may each have a length that is one third of the cycle.

Moreover, switching of the submodules of a phase leg is only performed in the first and second transition modes, i.e. during the second and fourth time intervals. Thereby switching in a phase leg is only performed in one third of the cycle.

In relation to an ideal waveshape, such as a sine waveshape, the control performed in the first and second transition modes involves controlling the phase leg to output a waveshape that resembles sections of the ideal wave, which are the sections of the ideal waveshape with the maximum (positive) derivative and minimum (negative) derivative, while the clamping modes clamps the wave into a square form around the maxima and minima. Each phase leg provides such a waveshape, and the waveshape of a phase leg is shifted 120 degrees from the waveshapes of the other phase legs.

The first, second and third phase legs are thus controlled according to the waveshape generating scheme for forming a waveshape on the first, second and third AC terminals.

It can be seen that through this type of control a fairly accurate representation of a sine wave is obtained. The waveform would require some more filtering compared to a regular MMC. The DC voltage may additionally fluctuate. However, this is of lower concern in back-to-back applications. The main benefit is that the size of the energy storage elements in the submodules may be drastically reduced compared with regular MMC operation. The capacitance of a submodule capacitor may be essentially one sixth of the capacitance needed by a regularly operated MMC. Another advantage is that the current rating of the submodules may be lowered. The switch used to insert the submodule energy storage element may have 1/3 of the current compared with a regularly operated MMC, while the bypassing switch may have half the current rating compared with a regularly operated MMC. Another advantage is that no circulating currents are generated by the control. Thereby the arm reactors may be made small, which further enhances the compactness. This also reduces the losses.

It can thereby be seen that a compact first converter may be obtained. If also the second converter of the back-to-back converter arrangement is operated in the same way, i.e. in case also the second converter is a modular multilevel converter set to operate according to the waveform generating scheme, the size of this converter may also be reduced, leading to a significant compactness of the whole back-to-back converter arrangement.

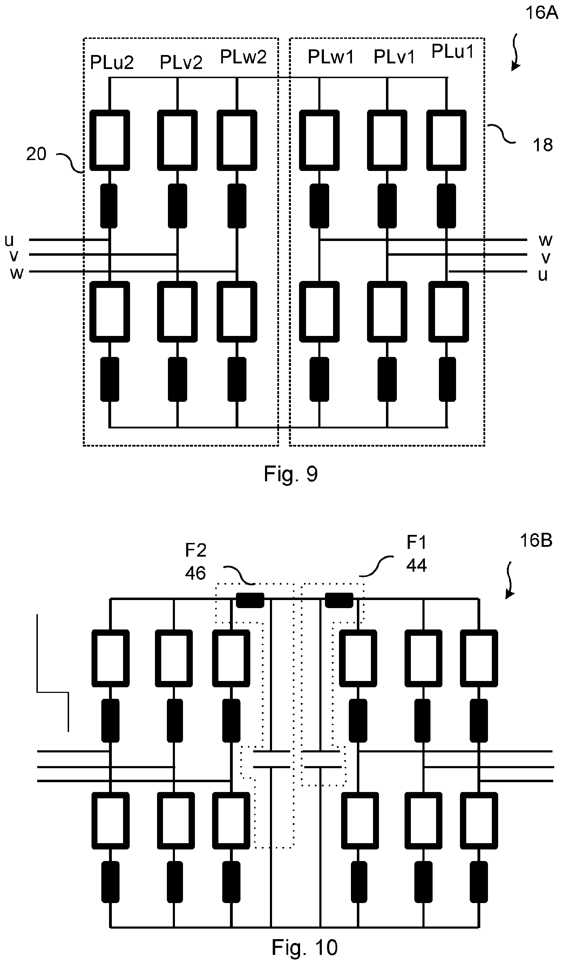

There are a number of different back-to-back converter arrangement realizations that are possible, where a first realization 16A is shown in fig. 9. In this realization both the first and second converters are MMCs. This realization may be used for both asynchronous and synchronous operation. In case the realization is used for synchronous operation of the two converters, i.e. that that the frequency and phase and optionally also the voltage on the two AC sides are the same, then the realization may be used both when the control steps according to fig. 7 are used and not used, where the control steps according to fig. 7 are the DC voltage control performed by the second converter 20 combined with power control by the first converter 18.

However, if there is asynchronous operation, i.e. at least one of frequency, phase and optionally also voltage of the first converter differs from the frequency or phase and possibly also voltage of the second converter, then the above-mentioned control is required, i.e. DC voltage control performed by the second converter 20 combined with power control by the first converter 18. If this control is omitted, then some additional filtering on the DC side is needed.

Fig. 10 schematically shows a back-to-back converter arrangement realization 16B designed for asynchronous operation that does not require DC voltage control by the second converter combined with power control by the first converter. In this realization 16B there is a first filter 44 F1 connected to the DC side of the first converter 18 and a second DC filter 46 F2 connected to the DC side of the second converter 20, where in this case each filter is realized as a reactor and capacitor combination. Each filter 44 and 46 is set to filter out harmonics of the corresponding converter. The first filter 44 is thus set to filter out harmonics appearing on the DC side of the first converter 18 and the second filter 46 is set to filter out harmonics appearing on the DC side of the second converter 20. The harmonics being filtered out may additionally be sixth order harmonics. Each filter may thereby be set to filter sixth order harmonics.

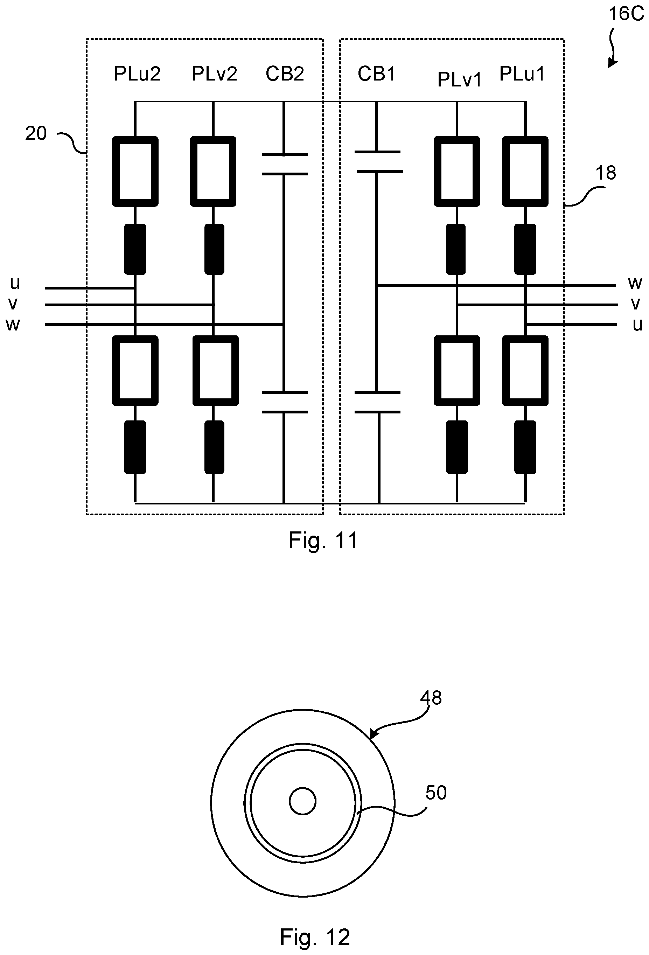

Finally, fig. 11 shows a further back-to-back converter arrangement realization. In this realization the third phase leg of both the first and the second converters 18 and 20 has been replaced by a branch or string CB1 and CB2 of energy storage elements connected between the first and the second DC terminals. The midpoint of such a string forms the third AC terminal. In the given example the energy storage elements are capacitors. In this type of converter only the first and second phase legs are controlled to form the desired waveshapes, while the branch midpoint is used as a center tap.

The control unit may be realized as a processor acting on computer instructions. This may be realized through hardware, such as an Application Specific Integrated Circuit (ASIC) or a Field-Programmable Gate Array (FPGA). However, the control unit may also be realized as a processor acting on computer program code in a memory. This computer program code may also be provided on one or more data carriers which performs the previously described control when being operated on by the processor. One such data carrier 48 with the previously mentioned computer program code 50, in the form of a CD ROM disc, is schematically shown in fig. 12.

## Claims

1. A back-to-back converter arrangement (16, 16A; 16B; 16C) comprising a first and a second voltage source converter (18, 20), each converting between Alternating Current (AC) and Direct Current (DC) and having an AC side and a DC side, where the DC side of the first voltage source converter (18) is connected to the DC side of the second voltage source converter (20), wherein the first voltage source converter (18) is a modular multilevel converter comprising:
at least a first and a second phase leg (PLu, PLv) connected between a first DC terminal (DC1) having a first DC voltage (Vdc1) and a second DC terminal (DC2) having a second DC voltage (Vdc2), each phase leg comprising an upper arm (uua, vua) and a lower arm (ula, vla) with submodules (Su1, Su2, Su3, Su4, Sv1, Sv2, Sv3, Sv4), where each submodule comprises an energy storage element and the junction (ju, jv) between the arms is connected to a corresponding AC terminal (Vsu, Vsv), the back-to-back converter arrangement (16) further comprising a control unit (36) configured to:
control each phase leg comprising submodules according to a waveform generating scheme for generating a waveform on the AC terminal of the corresponding phase leg, the control according to the waveform generating scheme comprising
controlling the submodules in the upper phase arm to bypass their energy storage elements and the submodules in the lower phase arm to be blocked in a first time interval (TI1) of a control cycle for the phase leg in order to provide the first DC voltage (Vdc1) on the AC terminal,
controlling the submodules in the upper and lower phase arms to transition from the first to the second DC voltage in a second time interval (TI2) of the control cycle,
controlling the submodules in the upper phase arm to be blocked and the submodules in the lower phase arm to bypass their energy storage elements in a third time interval (TI3) of the control cycle in order to provide the second DC voltage (Vdc2) on the AC terminal, and
controlling the submodules in the upper and lower phase arm to transition from the second to the first DC voltage in a fourth time interval (TI4) of the control cycle.

2. The back-to-back converter arrangement (16, 16A; 16B; 16C) according to claim 1, wherein when the submodules in the upper and lower phase arms of a phase leg are controlled to transition between the first and the second DC voltages, the control unit (36) is further configured to control the submodules in the phase arms of the other phase legs to bypass their energy storage elements or be blocked.

3. The back-to-back converter arrangement (16, 16A; 16B; 16C) according to claim 1 or 2, wherein the second converter is set to perform DC voltage control and the first converter is set to perform power control.

4. The back-to-back converter arrangement (16, 16A; 16B; 16C) according to any previous claim, wherein the second converter is a modular multilevel converter also set operate according to the waveform generating scheme.

5. The back-to-back converter arrangement (16, 16A; 16B; 16C) according to any previous claim, the first converter (18) further comprising a third phase leg (PLw) with an upper and a lower phase arm (wua, wla) and controlled by the control unit (36) according to the waveform generating scheme for forming a waveshape on a third AC terminal (Vsw) of the third phase leg (PLw).

6. The back-to-back converter arrangement (16, 16A; 16B; 16C) according to any of claims 1 - 4, the first converter (18) further comprising a branch of energy storage elements connected between the first and the second DC terminals, said branch comprising a midpoint with a third AC terminal.

7. The back-to-back converter arrangement (16, 16A; 16B; 16C) according to any previous claim, further comprising a first filter (44) connected to the DC side of the first converter (18) and set to filter harmonics on the DC side of the first converter (18) and a second filter (46) connected to the DC side of the second converter (20) and set to filter harmonics on the DC side of the second converter (20).

8. The back-to-back converter arrangement (16, 16A; 16B; 16C) according to claim 7, wherein each filter (44, 46) is set to filter sixth order harmonics.

9. The back-to-back converter arrangement (16, 16A; 16B; 16C) according to any previous claim, wherein the frequency and phase of the first and second voltage source converters (18, 20) are the same.

10. The back-to-back converter arrangement (16, 16A; 16B; 16C) according to claim 7 or 8, wherein at least one of frequency and phase of the first converter (18) differs from the frequency and phase of the second converter (20).

11. A motor drive comprising the back-to-back converter arrangement (16, 16A; 16B; 16C) according to any previous claim.

12. An AC power system (10) comprising a back-to-back converter arrangement (16, 16A; 16B; 16C) according to any of claims 1 - 10.

13. A method of controlling at least one first voltage source converter (18) of a back-to-back converter arrangement (16, 16A; 16B; 16C) comprising the first and a second voltage source converter (20), each converting between Alternating Current (AC) and Direct Current (DC) and having an AC side and a DC side, where the DC side of the first voltage source converter (18) is connected to the DC side of the second voltage source converter (20) and the first voltage source converter (18) is a modular multilevel converter comprising at least a first and a second phase leg (PLu, PLv) connected between a first DC terminal (DC1) having a first voltage level (Vdc1) and a second DC terminal (DC2) having a second voltage level (Vdc2), the first and second phase leg each comprising an upper arm (uua, vua) and a lower arm (ula, vla) with submodules (Su1, Su2, Su3, Su4, Svi, Sv2, Sv3), where each submodule comprises an energy storage element and the junction (ju, jv) between the arms is connected to a corresponding AC terminal (Vsu, Vsv), the method comprising controlling (42) each phase leg comprising submodules according to a waveform generating scheme for generating a waveform on the AC terminal of the corresponding phase leg, the controlling according to the waveform generating scheme comprising
controlling (42a) the submodules in the upper phase arm to bypass their energy storage elements and the submodules in the lower phase arm to be blocked in a first time interval (TI1) of a control cycle for the phase leg in order to provide the first DC voltage (Vdc1) on the AC terminal, controlling (42b) the submodules in the upper and lower phase arms to transition from the first to the second DC voltage in a second time interval (TI2) of the control cycle,
controlling (42c) the submodules in the upper phase arm to be blocked and the submodules in the lower phase arm to bypass their energy storage elements in a third time interval (TI3) of the control cycle in order to provide the second DC voltage (Vdc2) on the AC terminal, and controlling (42d) the submodules in the upper and lower phase arm to transition from the second to the first DC voltage in a fourth time interval (TI4) of the control cycle.

14. The method according to claim 13, further comprising controlling (38) the second voltage source converter (20) to perform DC voltage control and controlling (40) the first voltage source converter (18) to perform power control.

15. A computer program product for controlling at least one first voltage source converter (18) in a back-to-back converter arrangement (16) comprising the first and a second voltage source converter (20), each converting between Alternating Current (AC) and Direct Current (DC) and having an AC side and a DC side, where the DC side of the first voltage source converter (18) is connected to the DC side of the second voltage source converter (20) and the first voltage source converter (18) is a modular multilevel converter comprising at least a first and a second phase leg (PLu, PLv) connected between a first DC terminal (DC1) having a first voltage level (Vdc1) and a second DC terminal (DC2) having a second voltage level (Vdc2), the first and second phase leg each comprising an upper arm (uua, vua) and a lower arm (ula, vla) with submodules (Su1, Su2, Su3, Su4, Sv1, Sv2, Sv3, Sv4), where each submodule comprises an energy storage element and the junction (ju, jv) between the arms is connected to a corresponding AC terminal (Vsu, Vsv), said computer program product comprising a data carrier (48) with computer program code (50) configured to cause a control unit (36) to, when said computer program code is loaded into said control unit (36)
control each phase leg comprising submodules according to a waveform generating scheme for generating a waveform on the AC terminal of the corresponding phase leg, the control according to the waveform generating scheme comprising
controlling the submodules in the upper phase arm to bypass their energy storage elements and the submodules in the lower phase arm to be blocked in a first time interval (TI1) of a control cycle for the phase leg in order to provide the first DC voltage (Vdc1) on the AC terminal,
controlling the submodules in the upper and lower phase arms to transition from the first to the second DC voltage in a second time interval (TI2) of the control cycle,
controlling the submodules in the upper phase arm to be blocked and the submodules in the lower phase arm to bypass their energy storage elements in a third time interval (TI3) of the control cycle in order to provide the second DC voltage (Vdc2) on the AC terminal, and
controlling the submodules in the upper and lower phase arm to transition from the second to the first DC voltage in a fourth time interval (TI4) of the control cycle.
